(19) Europäisches Patentamt
European Patent Office
Office européen des brevets

(11) **EP 1 533 886 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(51) Int Cl.:
*H02M 1/42* (2007.01)     *H02M 3/156* (2006.01)

(21) Anmeldenummer: **04021892.7**

(22) Anmeldetag: **15.09.2004**

(54) **Verfahren zum Betreiben eines Hochsetzstellers**

Method for operating a step-up converter

Procédé pour opérer un convertisseur élévateur

(84) Benannte Vertragsstaaten:
**DE FR GB IT**

(30) Priorität: **18.11.2003 DE 10353835**

(43) Veröffentlichungstag der Anmeldung:
**25.05.2005 Patentblatt 2005/21**

(73) Patentinhaber: **ROBERT BOSCH GMBH**
**70442 Stuttgart (DE)**

(72) Erfinder:
• **Reineke, Joerg**
  **71254 Ditzingen (DE)**
• **Graf, Marco**
  **70469 Stuttgart (DE)**
• **Schinzel, Mirko**
  **70378 Stuttgart (DE)**
• **Hedenetz, Andreas**
  **73770 Denkendorf (DE)**

(56) Entgegenhaltungen:
JP-A- 10 127 046    JP-A- 11 089 270
JP-A- 11 150 952    JP-A- 2000 215 996
JP-A- 2001 086 757    US-A- 4 546 421
US-A- 5 982 156    US-B1- 6 281 668

**EP 1 533 886 B1**

**Beschreibung**

Die Erfindung betrifft ein Verfahren zum Betreiben eines Hochsetzsteller, insbesondere eines Sperrwandlers. Darüber hinaus betrifft die Erfindung ein Computerprogramm sowie einen Hochsetzsteller zum Durchführen dieses Verfahrens sowie einen Datenträger mit dem Computerprogramm.

Stand der Technik

Im Stand der Technik sind Hochsetzsteller, insbesondere Sperrwandler, grundsätzlich bekannt. Sie dienen allgemein zum Hochsetzen ihrer eigenen Ausgangsspannung auf ein gegenüber ihrer Eingangsspannung gewünschtes erhöhtes Ausgangsspannungsendniveau. Zu diesem Zweck umfassen sie typischerweise folgende Komponenten: Einen Eingangskondensator, der parallel zu ihrer Eingangsspannung liegt, und eine zu dem Eingangskondensator parallel geschaltete erste Reihenschaltung umfassend eine Drossel und ein gesteuertes Schaltelement. Parallel zu dem Schaltelement ist typischerweise eine zweite Reihenschaltung vorgesehen, welche eine Diode und einen Ausgangskondensator umfasst. Die Diode ist dabei typischerweise mit ihrer Kathode an den Ausgangskondensator und mit ihrer Anode an die Drossel angeschlossen. Die Ausgangsspannung des Hochsetzstellers ist dann über dem Ausgangskondensator abgreifbar. Bekannte Hochsetzsteller dieser Art können insbesondere in zwei Betriebsmodi, einem Betriebsmodus Hochlauf und einem Betriebsmodus Normalbetrieb betrieben werden. Während des Betriebsmodus Hochlauf wird die Ausgangsspannung des Hochsetzsteller, wie gesagt, auf das gewünschte gegenüber der Eingangsspannung erhöhte Ausgangsspannungsendniveau angehoben. Demgegenüber versucht der Hochsetzsteller im Betriebsmodus Normalbetrieb das Ausgangsspannungsendniveau zu halten beziehungsweise auszuregeln. Beide Betriebsmodi werden bekannterweise dadurch realisiert, dass das Schaltelement in geeigneter Weise ein- und ausgeschaltet wird.

Es ist im Stand der Technik bekannt, den Strom durch das Schaltelement zu überwachen und das Schaltelement gegebenenfalls vor Ablauf des Endes einer normalen periodischen Taktung abzuschalten, wenn der Strom durch das Schaltelement einen vorgegebenen Schwellenwert überschreitet.

Diese Vorgehensweise ist zum einen kostenaufwendig, weil die Bauelemente für die erwähnte Stromüberwachung und deren Einbau mit Kosten verbunden sind. Darüber hinaus arbeitet die beschriebene Ansteuerung zu ungenau und zu wenig effizient. Dies zeigt sich darin, dass der Hochsetzsteller seine Ausgangsleistung im Normalbetrieb nur mit relativ großen Toleranzen bereitstellen kann, was zu einer Zerstörung eines durch den Hochsetzsteller gespeisten Verbrauchers, insbesondere einer Piezo-Endstufe, führen kann. Diese Toleranzen der Ausgangsleistung resultieren aus Toleranzen der Bauelemente für die Stromüberwachung als auch der Mess- und Regelstrecke.

Die JP 2000 215 996 zeigt eine Zündvorrichtung für Entladungslampen mit einem Hochsetzsteller zum Hochsetzen einer Gleichspannung. Dabei umfasst der Hochsetzsteller eine Drossel (Primärspule eines Transformators) und ein steuerbares Schaltelement, welches von einer Kontrolleinrichtung zum Hochsetzen der Spannung zeitabhängig angetrieben wird. Ferner findet eine Überwachung der Eingangs- und Ausgangsspannung des Hochsetzsteller statt, wobei im Falle einer Fehlfunktion der Betrieb der Kontrolleinrichtung gestoppt wird.

In der US 4 546 421 ist ein Tief-Hochsetzsteller mit einer Drossel und einem dazu in Reihe geschalteten Halbleiterschalter beschrieben. Der Halbleiterschalter wird dabei periodisch mit Schaltpulsen angesteuert, deren Einschaltdauer bzw. Tastverhältnis von einer Sägezahnspannung abgeleitet wird, wobei die Steigung und die Amplitude der Sägezahnspannung in Abhängigkeit einer gewichteten Summe aus Eingangsspannung und Ausgangsspannung des Tief-Hochsetzstellers eingestellt wird.

Die US 6 281 668 B1 beschreibt einen Schaltregelkreis zur Ansteuerung eines Hochsetzstellers mit Schaltpulsen. Die Einschaltdauer bzw. das Tastverhältnis der Schaltpulse wird dabei in Abhängigkeit der Eingangsspannung des Hochsetzsteller, insbesondere umgekehrt proportional zur Eingangsspannung, geregelt.

Aufgabe der Erfindung ist es, ein bekanntes Verfahren und Computerprogramm zum Betreiben eines Hochsetzstellers sowie einen Datenträger mit dem Computerprogramm und einen Hochsetzsteller zum Durchführen dieses Verfahrens derart weiterzubilden, dass die Ausgangsspannung des Hochsetzsteller kostengünstiger und in weit engeren Toleranzgrenzen zuverlässig bereitgestellt wird, als dies im Stand der Technik möglich war.

Diese Aufgabe wird durch das im Patentanspruch 1 beanspruchte Verfahren und einem Hochsatzsteller gemäß Anspruch 8 gelöst.

Zum Verständnis der Erfindung ist zwischen dem Begriff Betriebsmodus des Hochsetzsteller und dem Begriff Betriebssituation von mindestens einer der Komponenten des Hochsetzstellers während eines eingestellten Betriebsmodus zu unterscheiden. Bei den Betriebsmodi für den Hochsetzsteller wird zwischen einem Hochlauf und einem Normalbetrieb unterschieden. Mit Betriebssituation einer Komponente des Hochsetzsteller ist insbesondere ein aktueller Spannungsabfall über dieser Komponente, zum Beispiel dem Eingangs- oder Ausgangskondensator gemeint. Die Betriebssituation einer Komponente des Hochsetzsteller kann sich während eines beibehaltenen Betriebsmodus ändern.

Vorteile der Erfindung

Im Unterschied zum Stand der Technik sieht das erfindungsgemäße Verfahren vor, dass das Schaltelement mit einer vorbestimmten Einschaltdauer angesteuert wird. Die Größe dieser Einschaltdauer wird vorteilhafterweise so gewählt, dass es weder zu einer Zerstörung von Komponenten des Hochsetzsteller noch zu einer Zerstörung von einem durch den Hochsetzsteller gespeisten Verbraucher, insbesondere einer Piezo-Endstufe, kommt. Aufgrund der Vorgabe der Größe der Einschaltdauern ist der erfindungsgemäße Hochsetzsteller in die Lage versetzt, seine Ausgangsspannung zur Speisung des Verbrauchers in weit engeren Toleranzgrenzen zuverlässig bereitzustellen, als dies im Stand der Technik möglich war.

Vorteilhafterweise erfolgt die Vorgabe für die Größe der Einschaltdauer für die unterschiedlichen Betriebsmodi des Hochsetzstellers auf unterschiedliche Weise. So ist es vorteilhaft, dass während des Betriebsmodus Hochlauf die Größe der Einschaltdauer des Schaltelementes im Ansprechen auf von der Ausgangsspannung während des Hochlaufens erreichten vorbestimmten Ausgangsspannungszwischenniveaus variiert wird. Demgegenüber ist es vorteilhaft, wenn nach dem Erreichen des Ausgangsspannungsendniveaus, das heißt während des Betriebsmodus Normalbetrieb, die Einschaltdauer umgekehrt proportional zu einer Veränderung der Batteriespannung definiert beziehungsweise vorbestimmt wird.

Die Aufgabe der Erfindung wird weiterhin durch ein Computerprogramm und einen Hochsetzsteller zum Durchführen dieses Verfahrens sowie durch einen Datenträger mit diesem Computerprogramm gelöst. Die Vorteile dieser Lösungen entsprechen den oben mit Bezug auf das beanspruchte Verfahren genannten Vorteilen.

Zeichnungen

Der Beschreibung sind insgesamt drei Figuren beigefügt, wobei

Figur 1    den Aufbau eines erfindungsgemäßen Hochsetzstellers;

Figur 2    verschiedene Stromverläufe während eines Betriebs des Hochsetzsteller; und

Figur 3    den Verlauf der Ausgangsspannung des Hochsetzsteller während eines Betriebsmodus Hochlauf

zeigt.

Beschreibung der Ausführungsbeispiele

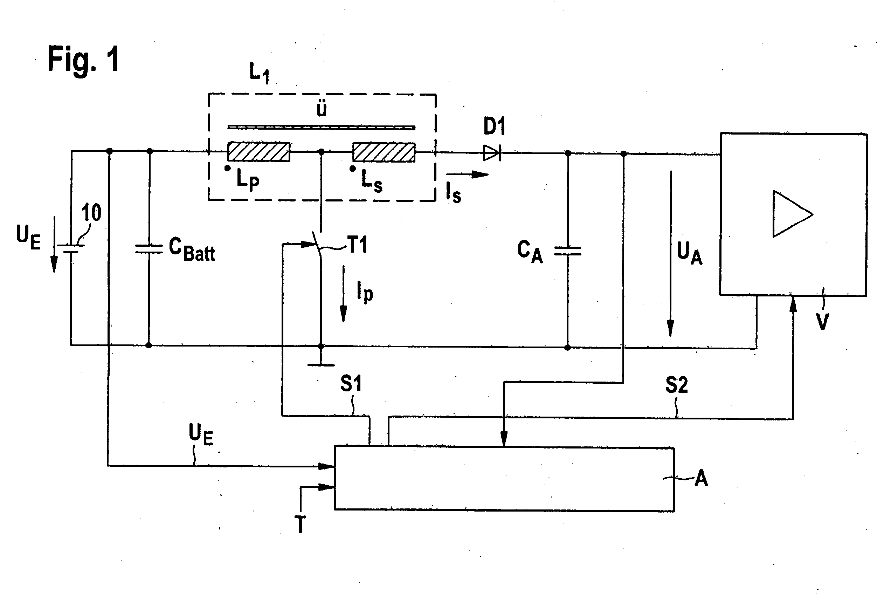

Die Erfindung wird nachfolgend detailliert in Form von Ausführungsbeispielen unter Bezugnahme auf die Figuren 1 - 3 näher beschrieben.

Figur 1 zeigt den Aufbau des erfindungsgemäßen Hochsetzstellers. Dieser dient zum Hochsetzen seiner Ausgangsspannung $U_A$ auf ein gegenüber seiner Eingangsspannung $U_E$ erhöhtes Ausgangsspannungsendniveau Th-N. Zu diesem Zweck umfasst er einen Eingangskondensator $C_{Batt}$, der parallel zu der Eingangsspannung $U_E$ geschaltet ist. Diese Eingangsspannung wird typischerweise von einer Batterie 10 bereitgestellt. Zu dem Eingangskondensator $C_{Batt}$ ist eine erste Reihenschaltung parallel geschaltet. Diese umfasst eine Drossel $L_P$ und ein gesteuertes Schaltelement T1. Zu dem Schaltelement T1 ist eine zweite Reihenschaltung parallel geschaltet. Bei dem in Figur 1 gezeigten Ausführungsbeispiel des Hochsetzsteller umfasst diese zweite Reihenschaltung eine Sekundärdrossel $L_S$, welche zusammen mit der Primärdrossel $L_P$ einen Drosselübertrager $L_1$ mit einem Übersetzungsverhältnis ü bildet. Die Verwendung eines derartigen Drosselübertrager $L_1$ hat gegenüber der Verwendung einer einfachen Drossel in der ersten Reihenschaltung den Vorteil, dass sie das Hochsetzen durch den Hochsetzsteller insbesondere bei großen Spannungsunterschieden zwischen dem angestrebten Ausgangsspannungsendniveau Th-N und der Eingangsspannung $U_E$ erleichtert.

Neben der Sekundärdrossel $L_S$ weist die zweite Reihenschaltung eine Diode D1 und einen Ausgangskondensator $C_A$ auf. Die Diode D1 ist mit ihrer Kathode an den Ausgangskondensator $C_A$ und mit ihrer Anode an die Sekundärdrossel $L_S$ geschaltet. Die Ausgangsspannung $U_A$ des Hochsetzstellers ist über dem Ausgangskondensator $C_A$ abgreifbar; sie dient typischerweise als Versorgungsspannung für einen zu dem Ausgangskondensator $C_A$ parallel geschalteten Verbraucher V. Vorzugsweise handelt es sich bei diesem Verbraucher V um eine Piezo-Endstufe zur Ansteuerung von Piezo-Injektoren (hier nicht gezeigt).

Weiterhin umfasst der Hochsetzsteller eine Ansteuerschaltung A zum Betreiben des Hochsetzsteller in einem eingestellten Betriebsmodus durch geeignetes Ein- und Ausschalten des Schaltelementes T1 über eine Signalleitung S1. Zum Generieren geeignet Ein- und Ausschaltsignale werden der Ansteuerschaltung A neben einem Taktsignal T auch die Eingangsspannung $U_E$ und die Ausgangsspannung $U_A$ zugeführt. In die Ansteuerschaltung A kann eine Steuerung zur Steuerung des Verbrauchers V über eine Signalleitung S2 integriert sein.

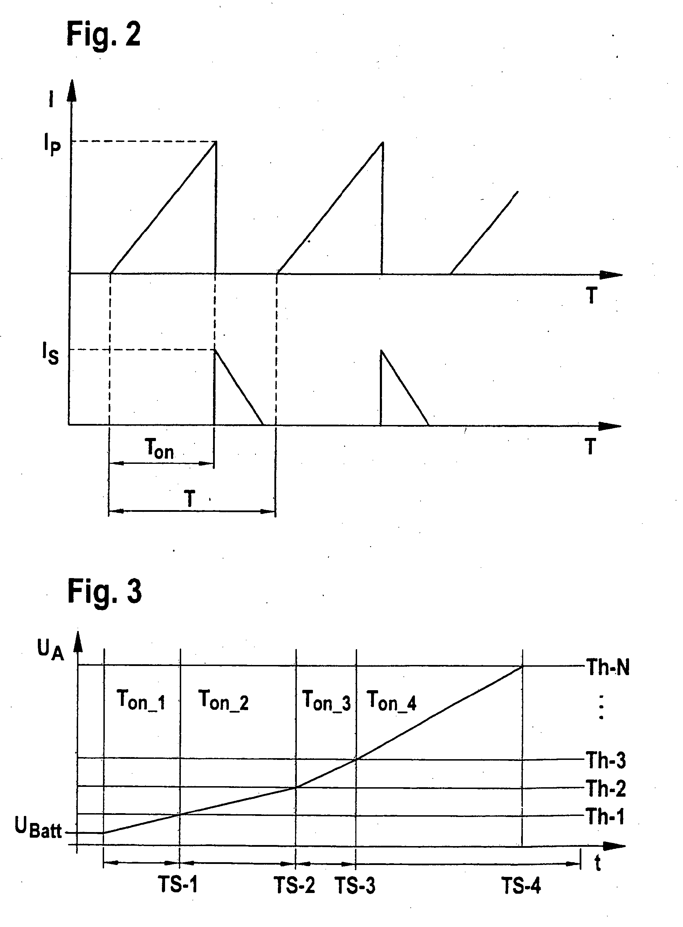

Die Funktionsweise des soeben unter Bezugnahme auf Figur 1 beschriebenen Hochsetzstellers und insbesondere von dessen Ansteuerschaltung A wird nachfolgend unter Bezugnahme auf Figur 2 näher erläutert.

Figur 2 zeigt in ihrem oberen Teil den zeitlichen Verlauf eines Stromes $I_P$ durch das Schaltelement T1 während des Hochlaufs und des Normalbetriebs. Es ist zu erkennen, dass das Schaltelement T1 periodisch mit einem Schalttakt T angesteuert wird. Dieser Schalttakt entspricht beispielsweise einer Ansteuerfrequenz von 100 kHz. Erfindungsgemäß ist eine Einschaltzeitdauer $T_{on}$ vorgesehen, welche kleiner ist als der Schalttakt T, während derer das Schaltelement T1 eingeschaltet wird. In dem oberen Teil der Figur 2 ist zu erkennen, dass während dieser vorbestimmten Einschaltdauer der Strom $I_P$ durch das Schaltelement im Wesentlichen linear bis auf einen Spitzenwert $\hat{I}_P$ ansteigt. Dabei berechnet sich dieser Spitzenwert gemäß folgender Gleichung (1):

$$\hat{I}_P = \frac{U_E \cdot T_{on}}{L_P}, \qquad\qquad (1)$$

wobei

$\hat{I}_P$      den Spitzenwert des Stromes durch das Schaltelement T1;
$U_E$      die Eingangsspannung des Hochsetzstellers;
$L_P$      die Induktivität der Primärdrossel $L_P$; und
$T_{on}$      die erfindungsgemäß vorbestimmte Einschaltdauer

repräsentiert.

Während einer solchen Einschaltdauer $T_{on}$ ergibt sich eine Energiespeicherung W von:

$$W = \frac{\hat{I}_P^2 \cdot L_P}{2}, \qquad\qquad (2)$$

und eine Übertragerleistung von:

$$P = \frac{W}{T} = W \cdot f, \qquad\qquad (3)$$

wobei

f     dem Kehrwert des Schalttaktes T, das heißt der Schaltfrequenz entspricht.

Es sei an dieser Stelle nochmals besonders hervorgehoben, dass erfindungsgemäß die Einschaltdauer $T_{on}$ vorbestimmt ist. Im Unterschied zum Stand der Technik wird der Spitzenwert $\hat{I}_P$ am Ende jeder Einschaltdauer nicht vorgegeben, sondern dieser ergibt sich automatisch gemäß obiger Gleichung (1), wenn die Eingangsspannung $U_E$ und die Induktivität der Primärdrossel $L_P$ grundsätzlich als konstant angenommen werden.

Während die Induktivität der Primärdrossel $L_P$ tatsächlich während jeder Einschaltdauer und auch unabhängig vom Betriebsmodus des Hochsetzstellers als konstant angenommen wird, kann die Eingangsspannung $U_E$, auch wenn sie von einer Batterie 10 bereitgestellt wird, während des Betriebs des Hochsetzstellers schwanken. Um auch in solchen Fällen ein Überschreiten des Stromes $\hat{I}_P$ über zulässige Grenzschwellenwerte hinaus und damit eine Zerstörung von insbesondere einzelnen Komponenten des Hochsetzstellers zu vermeiden, ist erfindungsgemäß während des Betriebsmodus Normalbetrieb vorgesehen, die Größe der Einschaltdauer $T_{on}$ in Abhängigkeit von der Eingangsspannung $U_E$ zu steuern beziehungsweise vorzugeben. Dabei repräsentiert die Größe der Eingangsspannung $U_E$ die Betriebssituation des parallel zum Eingang geschalteten Eingangskondensators $C_{Batt}$ als eine der Komponenten des Hochsetzstellers. Allgemein gesprochen wird die Einschaltdauer $T_{on}$ jeweils so vorgegeben, dass ein maximal zulässiger Spitzenwert für den Strom $\hat{I}_P$ gemäß Gleichung (1) auch bei Schwankungen der Eingangsspannung $U_E$ nicht überschritten wird; dies bedeutet $T_{on}$ wird im Wesentlichen umgekehrt proportional zu einer Veränderung der Größe der Eingangsspannung $U_E$. Diese erfindungsgemäße automatische Adaption der Größe der Einschaltdauer $T_{on}$ kann entweder quasikontinu-ierlich im Rahmen einer Steuerung oder nach Maßgabe durch eine in der Ansteuerschaltung A hinterlegten ersten Tabelle erfolgen. In dieser ersten Tabelle sind möglichen Beträgen der Eingangsspannung $U_E$ geeignete Einschaltdauern

$T_{on}$ zugeordnet.

In der unteren Hälfte von Figur 2 ist der Strom $I_S$ durch die Diode $D_1$ aufgezeigt. Es ist zu erkennen, dass dieser Strom einen Betrag von 0 A aufweist, solange das Schaltelement T1 eingeschaltet ist. Bei dem in Figur 2 gezeigten Verhalten befindet sich der Wandler in der Betriebsart "Lückender Betrieb" (DCM - Discontinued Conduction Mode). Die Erfindung deckt aber auch den "Nichtlückenden Betrieb" (CCM - Continued Conduction Mode) ab. Erst wenn die Energiespeicherung durch ein Öffnen des Schaltelementes T1 endet, speist sich die zweite Reihenschaltung und der zu dem Ausgangskondensator $C_A$ parallel geschaltete Verbraucher im Wesentlichen aus der Drossel $L_1$. Der Energievorrat der Drossel ist begrenzt, was zu einem schnellen, im Wesentlichen linearen Absinken des Stromes $I_S$ noch vor dem Ende des Schalttaktes T führt.

Die soeben für den Normalbetrieb des Hochsetzstellers beschriebene Vorgehensweise zur Vorbestimmung der Einschaltdauer des Schaltelementes im Ansprechen auf eine Veränderung der Eingangsspannung $U_E$ ist für den Betriebsmodus Hochlauf des Hochsetzstellers nicht sinnvoll; mit derartigen für den Normalbetrieb eingestellten Einschaltzeiten $T_{on}$ würden im Betriebsmodus Hochlauf zu große Ströme $\hat{I}_P$ oder $I_S$ in dem Hochsetzsteller fließen. Um eine Sättigung der Drossel $L_1$ und damit eine Zerstörung der Drossel und anderer Komponenten der Schaltung während des Betriebsmodus Hochlauf zu verhindern, werden die Einschaltdauern während des Betriebsmodus Hochlauf auf eine andere Weise vorbestimmt, wie nachfolgend erläutert wird.

Während des Betriebsmodus Hochlauf werden die Einschaltdauern nicht im Ansprechen auf Veränderungen der Eingangsspannung $U_E$, sondern auf Veränderungen der Ausgangsspannung $U_A$ vorbestimmt. Die Größe der Ausgangsspannung repräsentiert die jeweils aktuelle Betriebssituation des Ausgangskondensators ($C_A$) als Komponente des Hochsetzstellers. Genauer gesagt erfolgt die Vorbestimmung nach Maßgabe durch vorgegebene Ausgangsspannungszwischenniveaus Th-1...-n-1, welche alle kleiner sind als das Ausgangsspannungsendniveau Th-N.

In Figur 3 ist zu erkennen, dass solange die Ausgangsspannung $U_A$ des Hochsetzsteller kleiner als ein erstes Ausgangsspannungszwischenniveau Th-1 ist, das Schaltelement T1 periodisch mit einer vorbestimmten Einschaltdauer $T_{on\_1}$ eingeschaltet wird. Wenn dieses erste vorgegebene Ausgangsspannungszwischenniveau Th-1 zu einem Zeitpunkt TS-1 erreicht und überschritten wird, wird das Schaltelement T1 nachfolgend periodisch mit einer zweiten vorgegebenen Einschaltdauer $T_{on\_2}$ angesteuert. Eine analoge Umschaltung der vorbestimmten Größen der Einschaltdauern erfolgt bei dem in Figur 3 gezeigten Beispiel dann, wenn die Ausgangsspannung $U_A$ ein vorgegebenes zweites Ausgangsspannungszwischenniveau Th-2 und ein vorbestimmtes drittes Ausgangsspannungszwischenniveau Th-3 erreicht und überschritten hat. Grundsätzlich können beliebig viele Ausgangsspannungszwischenniveaus Th-n vorgesehen sein. Vorzugsweise wächst die Größe der vorgegebenen Einschaltdauern $T_{on\_i}$ mit i = 1...4 mit der Größe der Ausgangsspannung $U_A$.

Zur Realisierung des soeben unter Bezugnahme auf Figur 3 beschriebenen Verfahrens ist in der Ansteuerschaltung A vorzugsweise eine zweite Tabelle hinterlegt, welche den vorgegebenen Ausgangsspannungszwischenniveaus Th-1...-N-1 jeweils eine geeignete Einschaltdauer zuordnet. Die Ausgangsspannungszwischenniveaus werden erfindungsgemäß so gewählt, dass insbesondere die besagten Ströme $I_P$ und $I_S$ einerseits nicht so groß werden, dass sie zu einer Zerstörung von Komponenten des Hochsetzstellers oder des Verbrauchers führen können. Andererseits müssen sie aber groß genug gewählt werden, um die Ausgangsspannung den Anforderungen entsprechend schnell zu erreichen.

Das erfindungsgemäße Verfahren wird vorzugsweise in Form eines Computerprogramms realisiert. Ein derartiges Computerprogramm kann gegebenenfalls mit weiteren Computerprogrammen, zum Beispiel zur Ansteuerung des Verbrauchers V auf einem computerlesbaren Datenträger abgespeichert werden. Bei dem Datenträger kann es sich um eine Diskette, eine Compact-Disc, einen Flash-Memory oder dergleichen handeln. Das auf dem Datenträger abgespeicherte Computerprogramm kann dann als Produkt an einen Kunden übertragen und verkauft werden. Eine Übertragung per Datenträger ist jedoch nicht zwingend erforderlich. Auch ohne Datenträger kann das Computerprogramm wiederum gegebenenfalls zusammen mit weiteren Computerprogrammen über ein elektronisches Kommunikationsnetzwerk, insbesondere das Internet, als Produkt an einen Kunden übertragen und verkauft werden.

Die in der Ansteuerschaltung hinterlegten Tabellen lassen sich nach Bauart, Dimensionierung und Anforderungen der Schaltungen entsprechend anpassen. Dies geschieht vorzugsweise mittels Computerzugriff.

**Patentansprüche**

1. Verfahren zum Betreiben eines Hochsetzstellers (100) zum Hochsetzen seiner Ausgangsspannung ($U_A$) auf ein gegenüber seiner Eingangsspannung ($U_E$) gewünschtes erhöhtes Ausgangsspannungsendniveau (The$_{end}$), wobei der Hochsetzsteller (100) aus einer Mehrzahl von Komponenten, darunter ein gesteuertes Schaltelement (T1), gebildet ist, und wobei das Verfahren folgende Schritte umfasst: Betreiben des Hochsetzstellers in einem aktuellen Betriebsmodus durch geeignetes Ein- und Ausschalten des Schaltelementes (T1) zum Hochsetzen der Ausgangsspannung ($U_A$); wobei das geeignete Ein- und Ausschalten des Schaltelementes (T1) nach Maßgabe durch eine

vorbestimmte Einschaltdauer ($T_{on}$) erfolgt, deren Größe im Ansprechen auf den aktuellen Spannungsabfall über einer der Komponenten des Hochsetzstellers während des aktuellen Betriebsmodus derart eingestellt wird, dass eine Überlastung von zumindest einzelnen der Komponenten des Hochsetzstellers vermieden wird, **dadurch gekennzeichnet, dass** die vorbestimmte Einschaltdauer ($T_{on}$) nach Maßgabe durch eine in einer Ansteuerschaltung (A) hinterlegten ersten Tabelle gewählt wird, die möglichen Beträgen der Eingangsspannung ($U_E$) geeignete Einschaltdauern ($T_{on}$) zuordnet.

**2.** Verfahren nach Anspruch 1, **dadurch gekennzeichnet, dass** während eines Betriebsmodus Hochlauf, währenddessen die Ausgangsspannung ($U_A$) des Hochsetzstellers auf ein gegenüber dessen Eingangsspannung ($U_E$) gewünschtes erhöhtes Ausgangsspannungsendniveau (Th-N) hochgesetzt wird, die Größe der Einschaltdauer ($T_{on}$) des Schaltelementes nach Maßgabe durch von der Ausgangsspannung ($U_A$) während des Hochlaufens erreichten vorbestimmten Ausgangsspannungszwischenniveaus (Th-1...-N-1), welche alle kleiner sind als das Ausgangsspannungsendniveau (Th-N), eingestellt wird.

**3.** Verfahren nach Anspruch 2, **dadurch gekennzeichnet, dass** die Größe der Einschaltdauern ($T_{on}$) mit der Größe der von der Ausgangsspannung erreichten Ausgangsspannungszwischenniveaus (Th-1...-N-1) wächst.

**4.** Verfahren nach einem der vorangegangenen Ansprüche, **dadurch gekennzeichnet, dass** während eines Betriebsmodus Normalbetrieb, währenddessen der Hochsetzsteller versucht, das Ausgangsspannungsendniveau (Th-N) zu halten beziehungsweise auszuregeln, die Größe der Einschaltdauer ($T_{on}$) des Schaltelementes (T1) im Ansprechen auf eine Veränderung der Batteriespannung ($U_E$) eingestellt wird.

**5.** Verfahren nach Anspruch 4, **dadurch gekennzeichnet, dass** die Größe der Einschaltdauer ($T_{on}$) umgekehrt proportional nach Maßgabe zu einer Veränderung der Größe der an dem Eingangskondensator ($C_{Batt}$) abfallenden Batteriespannung ($U_E$) angepasst wird.

**6.** Computerprogramm mit Programmcode für eine Ansteuerschaltung (A) eines Hochsetzstellers, **dadurch gekennzeichnet, dass** der Programmcode ausgebildet ist zum Durchführen des Verfahrens nach einem der Ansprüche 1 bis 5.

**7.** Datenträger **gekennzeichnet durch** das Computerprogramm nach Anspruch 6.

**8.** Hochsetzsteller zum Hochsetzen seiner Ausgangsspannung ($U_A$) auf ein gegenüber seiner Eingangsspannung ($U_E$) erhöhtes Ausgangsspannungsendniveau (Th-N), umfassend eine Mehrzahl von Komponenten, darunter eine zu der Eingangsspannung ($U_E$) parallel geschaltete erste Reihenschaltung mit einer Drossel ($L_P$) und einem gesteuerten Schaltelement (T1); und eine Ansteuerschaltung (A) zum Betreiben des Hochsetzstellers in einem aktuellen Betriebsmodus durch geeignetes Ein- und Ausschalten des Schaltelementes (T1) zum Hochsetzen der Ausgangsspannung ($U_A$); wobei die Ansteuerschaltung (A) derart ausgebildet ist, dass zum geeigneten Ein- und Ausschalten das Schaltelement (T1) mit einer vorbestimmten Einschaltdauer ($T_{on}$) ansteuerbar ist, wobei deren Größe im Ansprechen auf den aktuellen Spannungsabfall über einer der Komponenten des Hochsetzstellers während des aktuellen Betriebsmodus derart einstellbar ist, dass eine Überlastung von zumindest einzelnen der Komponenten des Hochsetzstellers vermeidbar ist, **dadurch gekennzeichnet, dass** die vorbestimmte Einschaltdauer ($T_{on}$) nach Maßgabe durch eine in einer Ansteuerschaltung (A) hinterlegten ersten Tabelle wählbar ist, die möglichen Beträgen der Eingangsspannung ($U_E$) geeignete Einschaltdauern ($T_{on}$) zuordnet.

**9.** Hochsetzsteller nach Anspruch 8, **dadurch gekennzeichnet, dass** die Ansteuerschaltung (A) weiterhin ausgebildet ist zur Durchführung des Verfahrens nach einem der Ansprüche 2 bis 5.

**Claims**

**1.** Method for operating a step-up converter (100) for increasing its output voltage ($U_A$) to a desired output voltage final level ($Th_{end}$) which is increased in comparison with its input voltage ($U_E$), the step-up converter (100) being formed from a plurality of components, including a controlled switching element (T1), and the method comprising the following steps of: operating the step-up converter in a current operating mode by suitably switching the switching element (T1) on and off in order to increase the output voltage ($U_A$), the switching element (T1) being suitably switched on and off in accordance with a predetermined switch-on duration ($T_{on}$), the length of which is set, in response to the current voltage drop across one of the components of the step-up converter during the current operating mode, in such a manner that overloading of at least individual components of the components of the step-up converter is avoided, **characterized in that** the predetermined switch-on duration ($T_{on}$) is selected in accordance with a first table which is stored in a drive circuit (A) and assigns suitable switch-on durations ($T_{on}$) to possible magnitudes of the input voltage ($U_E$).

**2.** Method according to Claim 1, **characterized in that**, during a start-up operating mode during which the output voltage ($U_A$) of the step-up converter is increased to a desired output voltage final level (Th-N) which is increased in comparison with its input voltage ($U_E$), the length of the switch-on duration ($T_{on}$) of the switching element is set in accordance with predetermined output voltage intermediate levels (Th-1...-N-1) which are reached by the output voltage ($U_A$) during start-up and are all lower than the output voltage final level (Th-N).

**3.** Method according to Claim 2, **characterized in that** the length of the switch-on durations ($T_{on}$) increases with the magnitude of the output voltage intermediate levels (Th-1...-N-1) reached by the output voltage.

**4.** Method according to one of the preceding claims, **characterized in that**, during a normal operation operating mode during which the step-up converter attempts to keep or adjust the output voltage final level (Th-N), the length of the switch-on duration ($T_{on}$) of the switching element (T1) is set in response to a change in the battery voltage ($U_E$).

**5.** Method according to Claim 4, **characterized in that** the length of the switch-on duration ($T_{on}$) is adapted in an inversely proportional manner in accordance with a change in the magnitude of the battery voltage ($U_E$) dropped across the input capacitor ($C_{Batt}$).

**6.** Computer program having program code for a drive circuit (A) of a step-up converter, **characterized in that** the program code is designed to carry out the method according to one of Claims 1 to 5.

**7.** Data storage medium, **characterized by** the computer program according to Claim 6.

**8.** Step-up converter for increasing its output voltage ($U_A$) to an output voltage final level (Th-N) which is increased in comparison with its input voltage ($U_E$), comprising a plurality of components, including a first series circuit which is connected in parallel with the input voltage ($U_E$) and has an inductor ($L_P$) and a controlled switching element (T1); and a drive circuit (A) for operating the step-up converter in a current operating mode by suitably switching the switching element (T1) on and off in order to increase the output voltage ($U_A$), the drive circuit (A) being designed in such a manner that, for suitable switching on and off, the switching element (T1) can be driven with a predetermined switch-on duration ($T_{on}$), the length of which can be set, in response to the current voltage drop across one of the components of the step-up converter during the current operating mode, in such a manner that overloading of at least individual components of the components of the step-up converter can be avoided, **characterized in that** the predetermined switch-on duration ($T_{on}$) can be selected in accordance with a first table which is stored in a drive circuit (A) and assigns suitable switch-on durations ($T_{on}$) to possible magnitudes of the input voltage ($U_E$).

**9.** Step-up converter according to Claim 8, **characterized in that** the drive circuit (A) is also designed to carry out the method according to one of Claims 2 to 5.

## Revendications

**1.** Procédé pour faire fonctionner un convertisseur élévateur (100) pour élever sa tension de sortie ($U_A$) à un niveau final de tension de sortie ($Th_{end}$) augmenté souhaité par rapport à sa tension d'entrée ($U_E$), dans lequel le convertisseur élévateur (100) est constitué d'une pluralité de composants, parmi lesquels un élément de commutation commandé (T1), et dans lequel le procédé comprend les étapes consistant à : faire fonctionner le convertisseur élévateur dans un mode de fonctionnement instantané par activation et désactivation appropriées de l'élément de commutation (T1) afin d'augmenter la tension de sortie ($U_A$) ; dans lequel l'activation et la désactivation appropriée de l'élément de commutation (T1) s'effectue sur la base d'une durée d'activation prédéterminée ($T_{on}$) dont la valeur est ajustée en réponse à la chute de tension instantanée aux bornes de l'un des composants du convertisseur élévateur pendant le mode de fonctionnement instantané de telle manière qu'une surcharge d'au moins certains des composants du convertisseur élévateur puisse être évitée, **caractérisé en ce que** la durée d'activation prédéterminée ($T_{on}$) est sélectionnée sur la base d'une première table stockée dans un circuit de commande (A), laquelle table associe à des valeurs possibles de la tension d'entrée ($U_E$) des durées d'activation ($T_{on}$) appropriées.

**2.** Procédé selon la revendication 1, **caractérisé en ce que**, pendant le démarrage d'un mode de fonctionnement pendant lequel la tension de sortie ($U_A$) du convertisseur élévateur est augmentée à un niveau final de tension de sortie (Th-N) accru souhaité par rapport à sa tension d'entrée ($U_E$), la valeur de la durée d'activation ($T_{on}$) de l'élément de commutation est réglée sur la base de niveaux intermédiaires de la tension de sortie (Th-1...-N-1) prédéterminés atteints par la tension de sortie ($U_A$) pendant le démarrage, lesquels niveaux sont tous inférieurs au niveau final de la tension de sortie (Th-N).

**3.** Procédé selon la revendication 2, **caractérisé en ce que** la valeur des durées d'activation ($T_{on}$) croît avec la valeur des niveaux intermédiaires de la tension de sortie (Th-1...-N-1) atteints par la tension de sortie.

**4.** Procédé selon l'une quelconque des revendications précédentes, **caractérisé en ce que**, pendant un mode de fonctionnement normal pendant lequel le convertisseur élévateur cherche à maintenir ou à compenser le niveau final de la tension de sortie (Th-N), la valeur de la durée d'activation ($T_{on}$) de l'élément de commutation (T1) est réglée en réponse à une variation de la tension de batterie ($U_E$).

**5.** Procédé selon la revendication 4, **caractérisé en ce que** la valeur de la durée d'activation ($T_{on}$) est ajustée de manière inversement proportionnelle à une variation de la valeur de la tension de batterie ($U_E$) s'abaissant aux bornes du condensateur d'entrée ($C_{Batt}$).

**6.** Programme informatique comprenant un code de programme destiné à un circuit de commande (A) d'un convertisseur élévateur, **caractérisé en ce que** le code de programme est conçu pour mettre en oeuvre le procédé selon l'une quelconque des revendications 1 à 5.

**7.** Support de données **caractérisé par** le programme informatique selon la revendication 6.

**8.** Convertisseur élévateur destiné à augmenter sa tension de sortie ($U_A$) à un niveau final de tension de sortie (Th-N) augmenté par rapport à sa tension d'entrée ($U_E$), comprenant une pluralité de composants, parmi lesquels un premier circuit série connecté en parallèle à la tension d'entrée ($U_E$), constitué d'une inductance ($L_P$) et d'un élément de commutation commandé (T1) ; et un circuit de commande (A) destiné à faire fonctionner le convertisseur élévateur dans un mode de fonctionnement instantané par activation et désactivation appropriées de l'élément de commutation (T1) afin d'augmenter la tension de sortie ($U_A$) ; dans lequel
le circuit de commande (A) est conçu de telle manière que pour une activation et une désactivation appropriées, l'élément de commutation (T1) puisse être commandé avec une durée d'activation prédéterminée ($T_{on}$), dont la valeur peut être ajustée en réponse à la chute de tension instantanée aux bornes de l'un des composants du convertisseur élévateur pendant le mode de fonctionnement instantané de telle manière qu'une surcharge d'au moins certains des composants du convertisseur élévateur puisse être évitée, **caractérisé en ce que** la durée d'activation prédéterminée ($T_{on}$) peut être sélectionnée sur la base d'une première table stockée dans un circuit de commande (A), laquelle table associe à des valeurs possibles de la tension d'entrée ($U_E$) des durées d'activation ($T_{on}$) appropriées.

**9.** Convertisseur élévateur selon la revendication 8, **caractérisé en ce que** le circuit de commande (A) est en outre conçu pour mettre en oeuvre le procédé selon l'une quelconque des revendications 2 à 5.

**Fig. 1**

EP 1 533 886 B1

## Fig. 2

## Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000215996 B
- US 4546421 A
- US 6281668 B1